# DEMANDE DE BREVET EUROPEEN

(11) **EP 1 619 592 A1**
(43) Date de publication de la demande: **25.01.2006**
(21) Numéro de dépôt: 04291864.9
(22) Date de dépôt: 22.07.2004
(51) Int. Cl.: G06F 15/18

(54) **Dispositif et procédé d'étalonnage pour un outil de modélisation et outil de modélisation incorporant un tel dispositif.**

(71) Demandeur: FRANCE TELECOM, 75015 Paris (FR)
(72) Inventeur: Sayrac, Berna, 75015 Paris (FR); Fourestie, Benoit, 75014 Paris (FR); Renou, Sylvain, 92300 Levallois-Perret (FR)
(74) Mandataire: Loisel, Bertrand

(57) **Abrégé**

Ce dispositif d'étalonnage pour un outil de modélisation d'un système, à partir d'une observation des sorties du système comprend des moyens (18) de traitement des données de sortie issues d'un dispositif de simulation du système adaptés pour acquérir au cours d'une phase d'apprentissage préalable des modifications à apporter aux données de sortie pour les faire correspondre à des données de mesure correspondantes, et pour modifier les données de sortie conformément aux modifications acquises.

Il comprend en outre des moyens (16) de décomposition pour réaliser une décomposition des données de sorties et des données de mesure en composantes indépendantes, les moyens de traitement (18) assurant un traitement des données issues des moyens de décomposition.

L'invention trouve application à la modélisation des trajectoires de satellites en orbite ou la modélisation de réseaux de téléphonie mobile.

## Description

L'invention concerne la modélisation de systèmes complexes au moyen d'un outil de modélisation et se rapporte, plus particulièrement, à l'étalonnage d'un tel outil de modélisation.

Par « systèmes complexes », on entend, dans le cadre de la présente description, tout système ou ensemble de systèmes à fonction de transfert inconnue pour lequel on s'intéresse aux sorties produites en fonction de paramètres d'entrée.

Des applications particulièrement intéressantes d'un dispositif et d'un procédé d'étalonnage conformes à l'invention concernent la modélisation de réseaux de transport, de télécommunication, ... et, en particulier, la modélisation de la trajectoire d'un satellite en orbite et la modélisation d'un réseau de télécommunication. Cependant, l'invention s'applique, de manière générale, à tous types de domaines pour lesquels on dispose d'observations de sortie d'un système complexe.

La modélisation de tels systèmes consiste essentiellement à simuler leur comportement à partir d'observations des sorties obtenues pour des configurations données de paramètres d'entrée, afin de prédire les sorties produites par le système.

Dans l'état de la technique, diverses techniques peuvent être utilisées pour modéliser des systèmes complexes.

Une première technique est basée sur une connaissance *α priori* du système et consiste à combiner divers modèles mathématiques représentant chacun un phénomène physique et concret mis en jeu dans le système. Le modèle global, qui consiste en la combinaison de ces modèles, est alors utilisé pour calculer les sorties du système en fonction de paramètres d'entrée choisis.

Cette technique de modélisation est par nature imparfaite dans la mesure où les modèles mathématiques ne constituent qu'une approximation des phénomènes mis en jeu. Cette technique ne permet également pas d'intégrer aisément des observations des sorties du système afin d'adapter en conséquence le modèle global pour faire correspondre les sorties prédites aux sorties observées.

Une autre technique connue consiste à utiliser des sorties observées pour paramétrer un système d'apprentissage automatique de type « réseau de neurones ». Cette technique consiste à élaborer une fonction de transfert à partir d'une observation des sorties pour des paramètres d'entrée prédéterminés.

Cette technique est également limitée. En effet, elle ne permet pas d'utiliser des modèles mathématiques connus, dans la mesure où la fonction de transfert agit comme un simple opérateur mathématique. En outre, les données présentées sont souvent dépendantes les unes des autres et l'apprentissage sur des données dépendantes entraîne souvent une instabilité du modèle.

Tel est en particulier le cas dans les réseaux de télécommunication mobile lorsque l'on cherche à modéliser le comportement du réseau à partir de la puissance et de l'interférence des stations qui constituent des paramètres corrélés.

Au vu de ce qui précède, un premier but de l'invention est de fournir un dispositif d'étalonnage d'un outil de modélisation permettant de pallier ces inconvénients.

Un autre but de l'invention est de permettre la modélisation d'un système à partir, d'une part, d'une connaissance *α priori* des phénomènes mis en jeu et, d'autre part, d'une connaissance *α posteriori* de ces phénomènes obtenue par observation des sorties du système.

L'invention propose donc, selon un premier objet, un dispositif d'étalonnage d'un outil de modélisation d'un système, à partir d'une observation des sorties du système, comprenant des moyens de traitement des données de sortie issues d'un dispositif de simulation du système adaptés pour acquérir au cours d'une phase d'apprentissage préalable des modifications à apporter aux données de sorties pour les faire correspondre à des données de mesures correspondantes et pour modifier les données de sortie conformément aux modifications acquises.

Ce dispositif comporte en outre des moyens de décomposition pour réaliser une décomposition des données de sorties et des données de mesure en composantes indépendantes, les moyens de traitement assurant le traitement des données issues des moyens de décomposition.

Grâce à la décomposition des mesures et des prédictions fournies par l'outil de modélisation en composantes indépendantes, il est possible de combiner l'utilisation d'un outil de modélisation utilisant des connaissances *α priori* du système, telles que des modèles mathématiques représentant chacun un phénomène physique mis en jeu, et un module d'apprentissage utilisant des connaissances *α posteriori* du système obtenues par observation des sorties et qui permet de calculer une fonction de transfert entre les composantes indépendantes prédites par l'outil de modélisation et les composantes indépendantes mesurées à partir des sorties du système.

Selon une autre caractéristique de l'invention, le dispositif comporte en outre des moyens de décomposition inverse aptes à réaliser une décomposition inverse des données issues des moyens de traitement.

Par exemple, les moyens de décomposition comportent des moyens d'analyse en composantes indépendantes (ICA).

Dans un mode de réalisation, les moyens de traitement comportent un réseau neuronal.

Selon une autre caractéristique de l'invention, le dispositif comprend des moyens pour élaborer des densités des données issues des moyens de décomposition servant à réaliser une décomposition des sorties de l'outil de modélisation et des données de mesure en composantes indépendantes, les moyens de traitement assurant un traitement des données issues des moyens pour élaborer des densités statistiques.

Par exemple, les moyens pour élaborer les densités statistiques sont constitués par des moyens d'échantillonnage.

Selon un autre aspect, l'invention propose un outil de modélisation d'un système complexe, comprenant un outil de simulation du système pour prédire les sorties du système pour des entrées données, caractérisé en ce qu'il comporte en outre un dispositif d'étalonnage tel que défini ci-dessus.

Selon un troisième aspect, l'invention propose un procédé d'étalonnage d'un outil de modélisation d'un système à partir d'une observation des sorties du système, comprenant un traitement des données issues de l'outil de modélisation de manière à modifier les sorties dudit outil à partir d'un apprentissage préalable au cours duquel on acquiert des modifications à apporter aux sorties de l'outil pour les faire correspondre à des données de mesure correspondantes, caractérisé en ce que préalablement à l'étape de traitement, on décompose les sorties de l'outil de modélisation et des données de mesure issues de l'outil en composantes indépendantes.

Dans un mode de mise en oeuvre, postérieurement à l'étape de traitement des données, on procède à une décomposition inverse des données traitées. Par exemple, on met en oeuvre une méthode d'analyse en composantes indépendantes (ICA).

Par exemple, l'étape de traitement est mise en oeuvre au moyen d'un réseau neuronal.

Dans un mode de réalisation préféré, les étapes de procédé sont exécutées par un ordinateur sous la commande d'instructions de programme. Par conséquent, l'invention a également pour objet un programme d'ordinateur destiné à être stocké dans ou transmis par un support de données comprenant des instructions de programme pour faire exécuter le procédé par un ordinateur. Le support de données peut être un support matériel de stockage, par exemple un CD-ROM, une disquette magnétique ou un disque dur, ou bien un support transmissible tel qu'un signal électrique, optique ou radio.

D'autres buts, caractéristiques et avantages de l'invention apparaîtront à la lecture de la description suivante, donnée uniquement à titre d'exemple non limitatif, faite en référence aux dessins annexés sur lesquels :
- la figure 1 est un schéma synoptique illustrant l'architecture générale d'un outil de modélisation conforme à l'invention ;
- la figure 2 est un schéma synoptique illustrant la constitution du dispositif d'étalonnage entrant dans la constitution de l'outil de modélisation de la figure 1 ;
- la figure 3 est un autre schéma synoptique illustrant le fonctionnement du dispositif d'étalonnage conforme à l'invention, et
- la figure 4 est un organigramme illustrant les principales phases du procédé d'étalonnage d'un outil de modélisation conforme à l'invention.

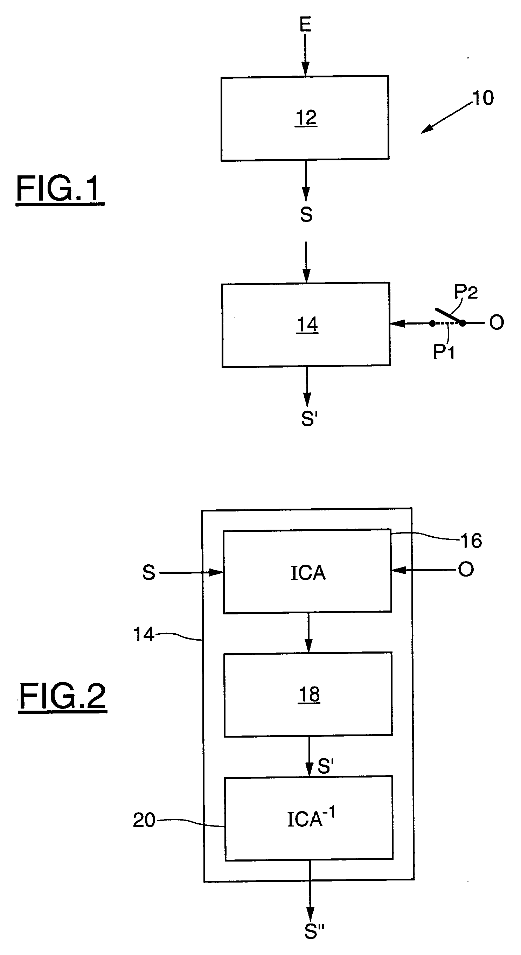

Sur la figure 1, on a représenté l'architecture générale d'un outil de modélisation d'un système complexe conforme à l'invention, désigné par la référence numérique générale 10.

Cet outil est destiné à constituer une modélisation d'un système complexe, tel qu'un réseau de télécommunication ou la trajectoire d'un satellite en orbite, pour prédire la ou les sorties du système pour des entrées données.

Ainsi, par exemple, dans le cadre de la modélisation de la trajectoire d'un satellite, les sorties délivrées par l'outil 10 sont constituées par les trois coordonnées du satellite dans un référentiel polaire lié à la terre.

Dans le cas de la modélisation d'un réseau de téléphonie mobile, les sorties peuvent être constituées par : la puissance totale émise par chaque station de base ; les interférences totales reçues par chaque station ; le nombre de communications coupées ; le nombre de communications non-admises ; le nombre de communications de mauvaise qualité ; le débit moyen pour chaque service en mode paquet ; ... Dans ce cas, les entrées E peuvent être constituées par le nombre de mobiles pour chaque service dans chaque station ; le nombre de mobiles en macro-diversité ; le rapport signal sur bruit nécessaire pour obtenir une communication de bonne qualité en fonction du service ; le paramétrage antennaire et de puissance maximale des stations ; la puissance des canaux partagés ou de signalisation ; les puissances maximales allouées par canal de trafic et par service ; les charges cibles des stations, ...

Comme on le voit sur la figure 1, l'outil 10 comporte deux étages, à savoir un premier étage 12 constituant un dispositif de simulation du système servant à prédire les sorties du système pour des entrées données, et un dispositif d'étalonnage 14 pour étalonner les sorties S délivrées par le dispositif de simulation 12 de manière à tenir compte des observations O des sorties du système.

Le dispositif de simulation 12 peut être constitué de différents types de simulateurs de type classique basés sur la connaissance *α priori* des phénomènes mis en jeu. On pourra ainsi utiliser un simulateur utilisant différents modèles mathématiques combinés simulant chacun un phénomène mis en jeu au sein du système.

Par exemple, pour la simulation d'un réseau de mobiles, on pourra utiliser divers types de modèles, tels qu'un modèle de propagation, un modèle de trafic, un modèle de déplacement des mobiles, etc.

On pourra également se référer à l'article intitulé « UMTS EASYCOPE : A Tool for UMTS Network and Algorithm Evaluation », Seminar on Brandboard Communications, Zurich, 2002, de J. Maucher, G. Kunz, et A. Rinkel, ou à l'article intitulé « Advanced WCDMA Radio Network Simulator », IEEE International Symposium on Personal, Indoor and Mobile Radioconference, Osaka, Japan, pages 951-955, 12-15 sept. 1999, de Seppo Hämäläinen, Harri Holma et Kari Sipilä, qui décrivent divers types de dispositifs de simulation pour modéliser un réseau de télécommunication de type mobile.

Le dispositif d'étalonnage 14 reçoit, en entrée, les sorties S du dispositif de simulation et modifie ces sorties de manière à élaborer des sorties S' correspondant le plus possible à la réalité.

Cet étalonnage est basé sur l'observation de sorties O du système, par ailleurs mesurées, et consiste à modifier les prédictions S délivrées par le dispositif de simulation 12 de manière à faire correspondre ces prédictions avec les observations des sorties du système (phase P1).

A l'issue de cette phase P1, les sorties prédites sont étalonnées en les modifiant selon les modifications déterminées lors de cette phase P1 (phase P2).

Le dispositif de simulation et le dispositif d'étalonnage sont constitués chacun par un calculateur intégrant tous les moyens matériels et logiciels permettant de modéliser et étalonner un système complexe. Ils peuvent également être constitués par des étages de calcul respectifs d'un même calculateur dûment programmé.

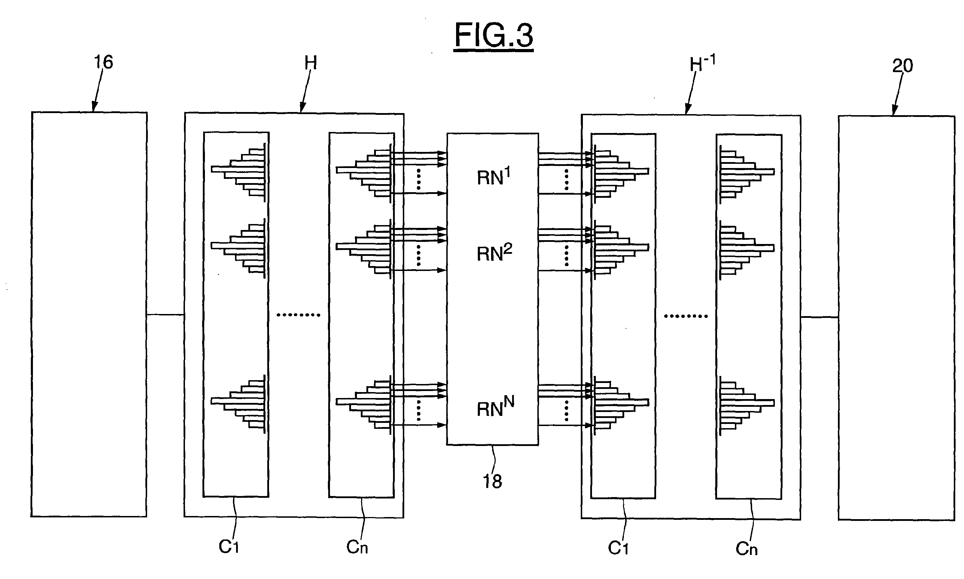

Dans l'exemple de réalisation illustré aux figures 2 et 3, le dispositif d'étalonnage comporte un premier étage 16 recevant, en entrée, les prédictions S issues du dispositif de modélisation 12 et, lors de la phase P1, les observations O. Cet étage comporte des moyens de traitement aptes à décomposer les prédictions S et les observations O en composantes indépendantes. Ainsi, en sortie de ce premier module 16, les signaux d'origine mutuellement indépendants sont extraits des prédictions élaborées par le dispositif de simulation 12.

Par exemple, ce premier étage 16 est constitué par un module d'analyse en composantes indépendantes ICA (« Independent Component Analysis »). Une telle méthode ICA est une méthode bien connue d'un homme du métier. Elle ne sera donc pas décrite en détail par la suite. On pourra, à cet égard, se référer au document intitulé « Independent Component Analysis, A New Concept », de P. Comon, Signal Processing, vol.36, n° 3, pages 287-314, avril 1994 (Elsevier), ou au document intitulé « Independent Component Analysis : A Tutorial » de Aapo Hyvärinen et Perkki Oja, Helsinki University of Technology ; Laboratory of Computer Information Science, P.O. Box 5400, Finland.

On notera néanmoins que la méthode ICA est basée sur l'observation d'un mélange de signaux pour accéder aux signaux indépendants et est fondée sur une hypothèse selon laquelle les composantes indépendantes ont des distributions non gaussiennes. Il s'agit essentiellement d'effectuer une transformation linéaire du mélange de signaux observés de manière à minimiser la dépendance statistique entre chacune des composantes. Cette indépendance est obtenue en raisonnant itérativement sur les moments statistiques, et l'analyse peut être arrêtée pour un ordre jugé suffisant. Une telle transformation est effectuée, d'une part, sur les données issues du dispositif de modélisation et, d'autre part, sur les données observées, de sorte que la même transformation est appliquée sur les données de sortie et sur les données observées.

Le dispositif d'étalonnage comporte en outre un deuxième étage 18 servant à élaborer des prédictions étalonnées S'.

Par exemple, ce deuxième étage 18 est constitué par un réseau neuronal servant à appliquer une transformation aux prédictions décomposées de manière à les faire correspondre au mieux aux composantes de sortie réelles du système modélisé.

Comme on le sait, un réseau neuronal est agencé sous la forme de couches constituant chacune un module de traitement. Ces couches sont reliées entre elle par des éléments de liaison qui s'étendent entre les neurones de chaque couche selon une configuration spécifique élaborée lors d'une phase d'apprentissage préalable au cours de laquelle ces éléments de liaison sont configurés de manière à faire correspondre les sorties du premier étage 16 avec les observations O.

Un troisième étage 20 réalise une décomposition inverse ICA⁻¹ de manière à effectuer une recombinaison des signaux décomposés issus du réseau neuronal 18. La construction de ce troisième étage 20 est similaire à celle du premier étage 16 et ne sera donc pas davantage détaillée.

Comme on le voit sur la figure 3, le traitement effectué par le réseau neuronal 18 s'effectue en parallèle sur chaque composante indépendante C1, ...CN, des prédictions issues du dispositif de modélisation 12. De même, la décomposition inverse effectuée par le troisième étage 20 est effectuée en parallèle sur chacune des composantes C1, ...CN issues du réseau neuronal 18 de manière à élaborer, en sortie, un signal S' dans lequel les composantes sont à nouveau corrélées.

Comme on le voit également sur la figure 3, l'étalonnage effectué est réalisé sur la base des distributions statistiques des prédictions fournies par le dispositif de simulation 12. En effet, un apprentissage direct effectué par un réseau neuronal sur des valeurs et non sur leur distribution conduit à des résultats peu fiables ou trop complexes.

Par « distribution », on entend la répartition de la variable prédite. Une telle distribution peut être obtenue par un dispositif d'échantillonnage conventionnel H. Par exemple, H peut être le calcul de l'histogramme de la variable prédite. H⁻¹ désigne l'opération inverse de H, soit le tirage de la variable prédite selon la distribution de la variable. Ainsi, le dispositif d'étalonnage incorpore un échantillonneur capable de calculer la distribution des prédictions délivrées par le dispositif 12. Par exemple, cet échantillonneur est intégré dans le premier étage 16 mettant en oeuvre la méthode d'analyse en composante indépendante. Il peut également être constituée par un module spécifique interposé entre les premier et deuxième étages 16 et 18 du dispositif d'étalonnage, comme représenté sur la figure 3.

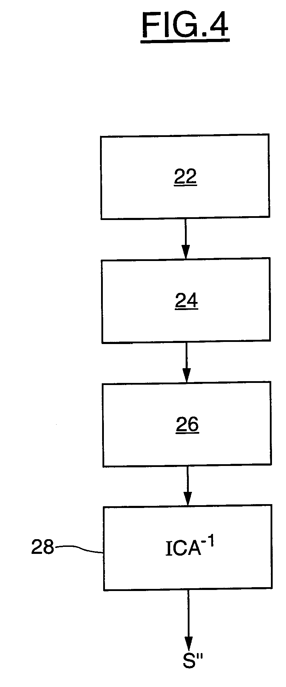

En se référant enfin à la figure 4, l'étalonnage d' un outil de modélisation d'un système complexe comporte une première phase 22 au cours de laquelle on récupère les prédictions issues du dispositif de modélisation 12.

Au cours de l'étape 24 suivante, on met en oeuvre une méthode d'analyse en composantes indépendantes ICA de manière à décomposer les prédictions en composantes indépendantes. Au cours de cette étape, on procède également à un échantillonnage des prédictions de manière à procéder aux calculs ultérieurs sur la base des distributions de ces données et non pas sur les valeurs elles-mêmes.

Le réseau neuronal 18 est alors mis en oeuvre (étape 26) de manière à modifier les composantes prédites en fonction des résultats de l'apprentissage préalable au cours duquel le réseau est configuré de manière à faire correspondre des composantes de sortie prédites à des composantes de sortie observées.

Lors de l'étape 28 suivante, on procède à une décomposition inverse des prédictions ainsi traitées de manière à recorréler les composantes indépendantes étalonnées et obtenir, en sortie, des prédictions étalonnées S'.

Comme indiqué précédemment, la décomposition préalable des mesures et des sorties du simulateur en composantes indépendantes permet de mettre en oeuvre un traitement utilisant un réseau neuronal et donc de combiner à un dispositif de modélisation, basé sur une connaissance *α priori* du système, un traitement additionnel basé sur des mesures, et donc sur des connaissances *α posteriori* et ce, sans nécessiter de traitement de complexité ingérable. En effet, en décomposant les sorties et les mesures en composantes indépendantes, il est possible de réaliser un apprentissage sur les distributions et ce, séparément, c'est-à-dire sans considérer les distributions conjointes.

Par ailleurs, grâce à l'utilisation de cette décomposition préalable, et en particulier la méthode d'analyse en composantes indépendantes ICA, il est possible de simplifier l'espace d'étude. En effet, lors de la décomposition en composantes indépendantes, on peut choisir de ne conserver que les composantes les plus importantes. Il est ainsi possible de diminuer le nombre de variables utilisées.

## Revendications

1. Dispositif d'étalonnage pour un outil de modélisation d'un système, à partir d'une observation des sorties du système, comprenant des moyens (18) de traitement des données de sortie issues d'un dispositif de simulation du système adaptés pour acquérir au cours d'une phase d'apprentissage préalable des modifications à apporter aux données de sortie pour les faire correspondre à des données de mesure correspondantes, et pour modifier les données de sortie conformément aux modifications acquises, **caractérisé en ce qu'**il comprend des moyens (16) de décomposition pour réaliser une décomposition des données de sorties (S) et des données de mesure (O) en composantes indépendantes, les moyens de traitement assurant un traitement des données issues des moyens (16) de décomposition.

2. Dispositif selon la revendication 1, **caractérisé en ce qu'**il comprend en outre des moyens de décomposition inverse (20) aptes à réaliser une décomposition inverse des données issues des moyens de traitement.

3. Dispositif selon l'une des revendications 1 et 2, **caractérisé en ce que** les moyens de décomposition comportent des moyens d'analyse en composantes indépendantes (ICA).

4. Dispositif selon l'une quelconque des revendications 1 à 3, **caractérisé en ce que** les moyens de traitement (18) comportent un réseau neuronal.

5. Dispositif selon l'une quelconque des revendications 1 à 4, **caractérisé en ce qu'**il comprend des moyens (16) pour élaborer des densités des données issues des moyens de décomposition servant à réaliser une décomposition des sorties de l'outil de modélisation et des données de mesure en composantes indépendantes, les moyens de traitement (18) assurant un traitement des données issues des moyens pour élaborer des densités statistiques.

6. Dispositif selon la revendication 5, **caractérisé en ce** les moyens pour élaborer des densités statistiques sont constitués par des moyens d'échantillonnage.

7. Outil de modélisation d'un système complexe, comprenant un dispositif (12) de simulation du système pour prédire les sorties du système pour des entrées données, **caractérisé en ce qu'**il comporte en outre un dispositif d'étalonnage (14) selon l'une quelconque des revendications 1 à 6.

8. Procédé d'étalonnage pour un outil de modélisation d'un système à partir d'une observation des sorties du système, comprenant un traitement des données issues de l'outil de modélisation (12) de manière à modifier les sorties (S) dudit outil à partir d'un apprentissage préalable au cours duquel on acquiert des modifications à apporter aux sorties de l'outil pour les faire correspondre à des données de mesure correspondantes, **caractérisé en ce que** préalablement à l'étape de traitement, on décompose les sorties de l'outil de modélisation et des données de mesure issues de l'outil en composantes indépendantes.

9. Procédé selon la revendication 8, **caractérisé en ce que** postérieurement à l'étape de traitement des données, on procède à une décomposition inverse des données traitées.

10. Procédé selon l'une des revendications 8 et 9, **caractérisé en ce qu'**au cours de l'étape de décomposition, on met en oeuvre une méthode d'analyse en composantes indépendantes (ICA).

11. Procédé selon l'une quelconque des revendications 8 à 10, **caractérisé en ce que** l'étape de traitement est mise en oeuvre au moyen d'un réseau neuronal.

12. Programme d'ordinateur enregistré sur un support de stockage de données, **caractérisé en ce qu'**il comprend des instructions de programme pour faire exécuter un procédé selon l'une quelconque des revendications 8 à 11 par un ordinateur.
